# EUROPEAN PATENT APPLICATION

(11) **EP 4 593 465 A1**
(43) Date of publication of application: **30.07.2025**
(21) Application number: 23868593.7
(22) Date of filing: 20.09.2023
(51) Int. Cl.: H04W 36/36, H04W 36/00, H04W 36/16, H04W 36/08

(54) **METHOD AND DEVICE FOR PERFORMING HANDOVER OF GROUP TERMINALS FOR REDUCING NETWORK ENERGY CONSUMPTION IN WIRELESS COMMUNICATION SYSTEM**

(30) Priority: 21.09.2022 KR 20220119373; 31.08.2023 KR 20230115420
(71) Applicant: Samsung Electronics Co., Ltd., Suwon-si, Gyeonggi-do 16677 (KR)
(72) Inventor: HWANG, June, Suwon-si Gyeonggi-do 16677 (KR); BAEK, Sangkyu, Suwon-si Gyeonggi-do 16677 (KR); JIN, Seungri, Suwon-si Gyeonggi-do 16677 (KR)
(74) Representative: Gulde & Partner
(86) International application number: PCT/KR2023/014303
(87) International publication number: WO 2024/063541

(57) **Abstract**

The disclosure relates to a 5G or 6G communication system for supporting a higher data transmission rate. A method performed by a UE in a wireless communication system according to an embodiment of the disclosure may include receiving an RRC message including information related to a target cell for a handover, valid condition information of the target cell, and information indicating a handover type from a base station, receiving information related to turnoff of a serving cell from the base station, and performing the handover, based on configuration information regarding the target cell and valid condition information of the target cell.

## Description

### [Technical Field]

The disclosure relates to a wireless communication system and, more particularly, to a method and an apparatus wherein, when a base station turns off a cell, a group of UEs is handed over to another cell.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G.

In the initial stage of 5G mobile communication technologies, in order to support services and to satisfy performance requirements in connection with enhanced Mobile BroadBand, (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there is ongoing discussion regarding improvement and performance enhancement of initial 5G mobile communication technologies in view of services to be supported by 5G mobile communication technologies, and there has been physical layer standardization regarding technologies such as V2X for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is impossible, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of wirless communication systems as described above, various services can be provided, and accordignly there is a need for ways to effectively provide these services.

### [Disclosure of Invention]

### [Solution to Problem]

The disclosure provides a method and an apparatus wherein, when a base station turns off a cell, a group of UEs is handed over to another cell.

A method performed by a UE in a wireless communication system according to an embodiment of the disclosure may include receiving an RRC message including information related to a target cell for a handover, valid condition information of the target cell, and information indicating a handover type from a base station, receiving information related to turnoff of a serving cell from the base station, and performing the handover, based on configuration information regarding the target cell and valid condition information of the target cell.

### [Advantageous Effects of Invention]

According to an embodiment of the disclosure, services may be provided effectively.

### [Brief Description of Drawings]

FIG. 1 illustrates the structure of a general LTE system.
FIG. 2 illustrates a radio protocol structure of a general LTE system.
FIG. 3 illustrates the structure of a new radio mobile communication system according to an embodiment of the disclosure.
FIG. 4 illustrates a radio protocol structure of a new radio mobile communication system according to an embodiment of the disclosure.
FIG. 5 is a block diagram illustrating the internal structure of a UE according to an embodiment of the disclosure.
FIG. 6 is a block diagram illustrating the configuration of a base station according to an embodiment of the disclosure.
FIG. 7 is a flowchart illustrating a case in which a network according to an embodiment of the disclosure transmits an explicit signal so as to instruct a handover of UEs.
FIG. 8 is a flowchart illustrating a case in which a serving cell according to an embodiment of the disclosure transmits no explicit turnoff signal or indication, and delivers a timer value to a UE, based on predefined turnoff time information.
FIG. 9 is a flowchart illustrating a case in which a turnoff withdrawal request message is delivered after an indication according to an embodiment of the disclosure.
FIG. 10 is a flowchart illustrating a case in which a message indicating absence of an available target cell or requesting turnoff withdrawal is delivered if a predefined timer according to an embodiment of the disclosure is given and then expires.

### [Best Mode for Carrying out the Invention]

A method performed by a UE in a wireless communication system according to an embodiment of the disclosure may include receiving an RRC message including information related to a target cell for a handover, valid condition information of the target cell, and information indicating a handover type from a base station, receiving information related to turnoff of a serving cell from the base station, and performing the handover, based on configuration information regarding the target cell and valid condition information of the target cell.

A method of a base station in a wireless communication system according to an embodiment of the disclosure may include transmitting an RRC message including information related to a target cell for a handover, valid condition information of the target cell, and information indicating a handover type to a UE, transmitting information related to turnoff of a serving cell to the UE, and turning off the serving cell.

A UE in a wireless communication system according to an embodiment of the disclosure may include a communication unit and a control unit connected to the communication unit, wherein the control unit is configured to receive an RRC message including information related to a target cell for a handover, valid condition information of the target cell, and information indicating a handover type from a base station, receive information related to turnoff of a serving cell from the base station, and perform the handover, based on configuration information regarding the target cell and valid condition information of the target cell.

A base station in a wireless communication system according to an embodiment of the disclosure may include a communication unit and a control unit connected to the communication unit, wherein the control unit is configured to transmit an RRC message including information related to a target cell for a handover, valid condition information of the target cell, and information indicating a handover type to a UE, transmit information related to turnoff of a serving cell to the UE, and turn off the serving cell.

A method performed by a UE according to an embodiment of the disclosure may include receiving configuration information regarding a target cell for a handover and valid condition information from a base station, receiving an indication that a serving cell is to be turned off from the base station, and performing the handover, based on the configuration information regarding the target cell and the valid condition information.

### [Mode for Invention]

Hereinafter, embodiments of the disclosure will be described in detail with reference to the accompanying drawings.

In describing the embodiments, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Furthermore, the "unit" in the embodiments may include one or more processors.

In the following description of the disclosure, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used below, and other terms referring to subjects having equivalent technical meanings may be used.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing communication functions. Of course, examples of the base station and the terminal are not limited thereto. In the disclosure, a "downlink (DL)" refers to a radio link via which a base station transmits a signal to a terminal, and an "uplink (UL)" refers to a radio link via which a terminal transmits a signal to a base station.

A wireless communication system is advancing to a broadband wireless communication system for providing high-speed and high-quality packet data services using communication standards, such as high-speed packet access (HSPA) of 3GPP, LTE {long-term evolution or evolved universal terrestrial radio access (E-UTRA)}, LTE-Advanced (LTE-A), LTE-Pro, high-rate packet data (HRPD) of 3GPP2, ultra-mobile broadband (UMB), IEEE 802.16e, and the like, as well as typical voice-based services.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to some embodiments, eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km2) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and also requires a packet error rate of 10-5 or less. Therefore, for the services supporting URLLC, a 5G system must provide a transmit time interval (TTI) shorter than those of other services, and also may require a design for assigning a large number of resources in a frequency band in order to secure reliability of a communication link.

The above-described three services considered in the 5G communication system, that is, eMBB, URLLC, and mMTC, may be multiplexed and transmitted in a single system. In order to satisfy different requirements of the respective services, different transmission/reception techniques and transmission/reception parameters may be used between the services. However, the above mMTC, URLLC, and eMBB are merely examples of different types of services, and service types to which the disclosure is applied are not limited to the above examples.

Furthermore, based on determinations by those skilled in the art, the disclosure may be applied to other communication systems through some modifications without significantly departing from the scope of the disclosure. Herein, it will be understood that each block of the flowchart illustrations, and combinations of blocks in the flowchart illustrations, can be implemented by computer program instructions.

These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved. As used herein, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Furthermore, the "unit" in the embodiments may include one or more processors.

In the following description of the disclosure, terms and names specified in the 5GS and NR standards, which are standards defined by the 3rd generation partnership project (3GPP) group among the existing communication standards, will be used for the sake of descriptive convenience. However, the disclosure is not limited by these terms and names, and may be applied in the same way to systems that conform other standards. For example, the disclosure may be applied to 3GPP 5GS/NR (5th generation mobile communication standards).

When a base station turns off a cell, multiple handover commands need to be performed with regard to UEs in an RRC-connected state. Therefore, it is necessary to reduce unnecessary signal transmission and latency resulting therefrom.

According to an embodiment of the disclosure, a UE receives configuration information regarding a target cell and a valid condition from a base station in advance, and the base station transmits a signal indicating that the corresponding cell will be turned off, through the cell. Based on this signal, all UEs in a connected state or UEs in a specific group perform handovers, respectively.

According to an embodiment of the disclosure, even if a base station turns off a cell, a UE may perform seamless data transmission/reception.

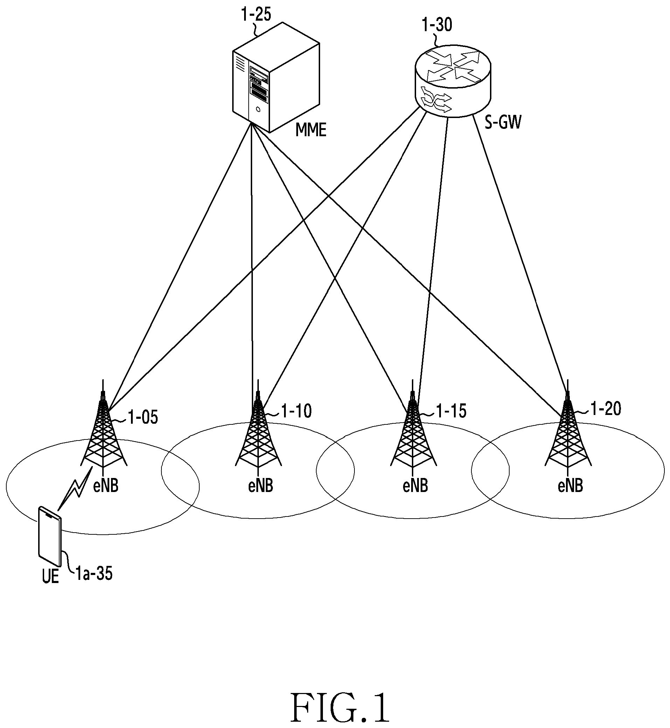

FIG. 1 illustrates the structure of an LTE system according to an embodiment of the disclosure.

Referring to FIG. 1, as illustrated, the radio access network of the LTE system may include evolved nodes B (hereinafter, referred to as ENBs, Nodes B, or base stations) 1-05, 1-10, 1-15, and 1-20, a mobility management entity (MME) 1-25, and a serving-gateway (S-GW) 1-30. User equipment (hereinafter, referred to as UE or terminal) 1-35 may access an external network through the ENB 1-05 to 1-20 and the S-GW 1-30.

In FIG. 1, the ENBs 1-05 to 1-20 may correspond to existing nodes B of a universal mobile telecommunication system (UMTS) system. The ENBs are connected to the UE 1-35 through a radio channel, and may perform more complicated roles than existing nodes B. In an LTE system, all user traffic, including a real-time service such as voice over IP (VoIP) through the Internet protocol, may be serviced through a shared channel. Therefore, there is a need for a device for aggregating and scheduling state information such as the buffer state of UEs, the available transmission power state, and the channel state, and the ENBs 1-05 to 1-20 may be in charge thereof. A single ENB may commonly control multiple cells. For example, in order to implement a transmission speed of 100 Mbps, an LTE system may use orthogonal frequency division multiplexing (OFDM) as a radio access technology in a 20 MHz bandwidth, for example. In addition, an adaptive modulation & coding (AMC) scheme may be applied such that the modulation scheme and the channel coding rate are determined according to the UE's channel state. The S-GW 1-30 is a device configured to provide a data bearer, and may generate or remove a data bearer under the control of the MME 1-25. The MME is a device in charge of various control devices as well as a mobility management function, and may be connected to multiple base stations.

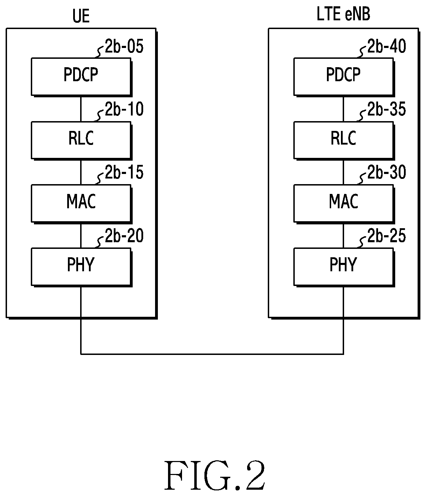

FIG. 2 illustrates a radio protocol structure of an LTE system according to an embodiment of the disclosure.

Referring to FIG. 2, the radio protocol of the LTE system may include packet data convergence protocols (PDCPs) 2-05 and 2-40, radio link controls (RLCs) 2-10 and 2-35, and medium access controls (MACs) 2-15 and 2-30 on a UE side and on an ENB side, respectively. The PDCPs may be in charge of operations such as IP header compression/restoration. Major functions of the PDCPs may be summarized as follows. The PDCPs may perform various functions without being limited to the following examples:
- Header compression and decompression: robust header compression (ROHC) only)
- Transfer of user data
- In-sequence delivery of upper layer protocol data units (PDUs) at packet data convergence protocol (PDCP) re-establishment procedure for radio link control (RLC) acknowledged mode (AM)
- For split bearers in dual connectivity (DC) (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

The radio link controls (RLCs) 2-10 and 2-35 may reconfigure a PDCP packet data unit (PDU) into an appropriate size and perform an automatic repeat request (ARQ) operation and the like. Major functions of the RLCs may be summarized as follows. The RLCs may perform various functions without being limited to the following examples:
- Transfer of upper layer PDUs
- Error correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC service data unit (SDU) discard (only for unacknowledged mode (UM) and AM data transfer)
- RLC re-establishment

The MACs 1b-15 and 1b-30 are connected to multiple RLC layer devices configured in one UE, and may perform operations of multiplexing RLC protocol data units (PDUs) to a MAC PDU and demultiplexing RLC PDUs from the MAC PDU. Major functions of the MACs may be summarized as follows. The MACs may perform various functions without being limited to the following examples:
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Hybrid automatic repeat request (HARQ) (error correction through HARQ)
- Priority handling between logical channels of one UE
- Priority handling between UEs by means of dynamic scheduling
- Multimedia broadcast and multicast service (MBMS) service identification
- Transport format selection
- Padding

Physical (PHY) layers 2-20 and 2-25 may perform operations of channel-coding and modulating upper-layer data, making an OFDM symbol, and transmitting the same to a radio channel, or demodulating an OFDM symbol received through the radio channel, channel-decoding the same, and delivering the same to the upper layer. The physical layers may perform various functions without being limited to such examples.

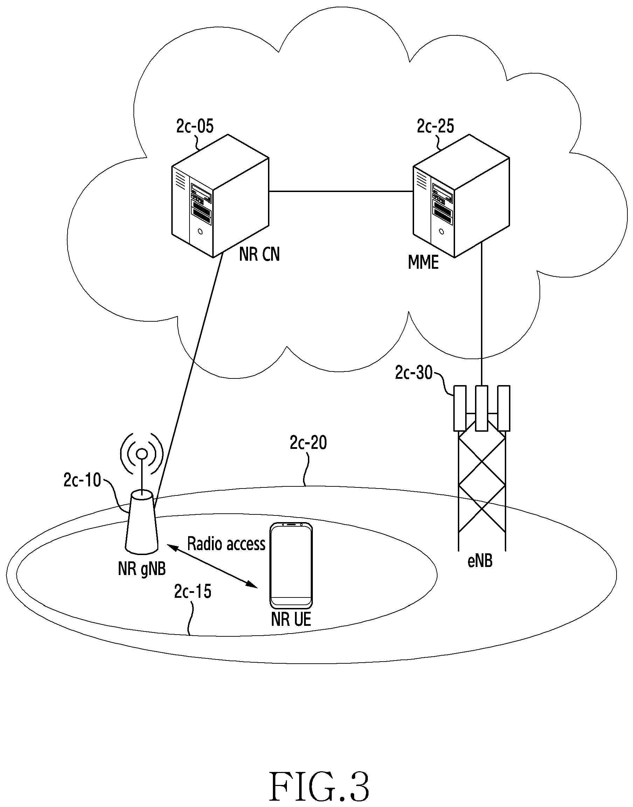

FIG. 3 illustrates the structure of a new radio mobile communication system according to an embodiment of the disclosure.

Referring to FIG. 3, the radio access network of the new radio mobile communication system (hereinafter, referred to as NR or 5G) may include a new radio node B (hereinafter, referred to as NR gNB or NR base station) 3-10 and a new radio core network (NR CN) 3-05. New radio user equipment (NR UE or terminal) 3-15 may access an external network through the NR gNB 3-10 and the NR CN 3-05.

In FIG. 3, the NR gNB 3-10 may correspond to an evolved node B (eNB) of an existing LTE system. The NR gNB is connected to the NR UE 3-15 through a radio channel, and may provide a better service than an existing node B. In a new radio mobile communication system, all user traffic may be serviced through a shared channel. Therefore, there is a need for a device for aggregating and scheduling state information such as the buffer state of UEs, the available transmission power state, and the channel state, and the NR NB 3-10 may be in charge thereof. A single NR gNB may commonly control multiple cells. In a new radio mobile communication system, in order to implement super-fast data transmission compared with current LTE, a bandwidth equal to/larger than the current maximum bandwidth may be applied. In addition, an additional beamforming technology may be combined by using orthogonal frequency division multiplexing (OFDM) as a radio access technology. In addition, an adaptive modulation & coding (AMC) scheme may be applied such that the modulation scheme and the channel coding rate are determined according to the UE's channel state. The NR CN 3-05 may perform functions such as mobility support, bearer configuration, and QoS configuration. The NR CN is a device in charge of various control functions in addition to a UE-related mobility management function, and may be connected to multiple base stations. In addition, the new radio mobile communication system may interwork with an existing LTE system, and the NR CN may be connected to an MME 3-25 through a network interface. The MME may be connected to an eNB 3-30 (existing base station).

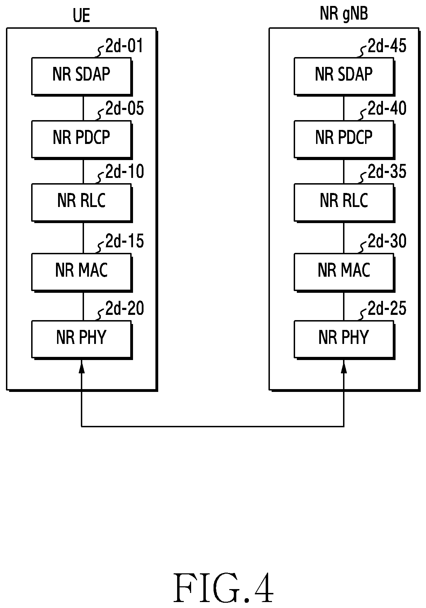

FIG. 4 illustrates a radio protocol structure of a new radio mobile communication system according to an embodiment of the disclosure.

Referring to FIG. 4, the radio protocol of the new radio mobile communication system includes NR service data adaptation protocols (SDAPs) 4-01 and 4-45, NR PDCPs 4-05 and 4-40, NR RLCs 4-10 and 4-35, NR MACs 4-15 and 4-30, and NR PHYs 4-20 and 4-25 on a UE side and on an NR base station side, respectively.

Major functions of the NR SDAPs 4-01 and 4-45 may include some of the following functions. The NR SDAPs may perform various functions without being limited to the following example:
- transfer of user plane data
- mapping between a QoS flow and a DRB for both downlink (DL) and uplink (UL)
- marking QoS flow ID in both DL and UL packets
- reflective QoS flow to DRB mapping for the UL SDAP PDUs

With regard to an SDAP layer device, a UE may receive a configuration regarding whether or not to use a header of the SDAP layer device with regard to each PDCP layer device or with regard to each bearer or with regard to each logical channel, or whether or not to use a function of the SDAP layer device, by means of a radio resource control (RRC) message received from a base station. If there is a configured SDAP header, the UE may be instructed to update or reconfigure mapping information regarding the data bearer and the QoS flow of the uplink and the downlink, by using a configuration one-bit indicator reflective of non-access stratum (NAS) quality of service (QoS) (NAS reflective QoS) of the SDAP header, and a configuration one-bit indicator reflective of access stratum (AS) quality of service (QoS) (AS reflective QoS). The SDAP header may include QoS flow ID information indicating the QoS. The QoS information may be used as data processing priority for supporting an efficient service, scheduling information, or the like.

Major functions of the NR PDCPs 4-05 and 4-40 may include some of the following function. The NR PDCPs may perform various functions without being limited to the following example:
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The reordering function of an NR PDCP device may refer to a function of reordering PDCP PDUs received from the lower layer, based on a PDCP sequence number (SN). The reordering function of an NR PDCP device may include a function of delivering data to the upper layer in the rearranged order, a function of instantly delivering data without considering the order, a function of recording PDCP PDUs lost as a result of reordering, a function of reporting the state of the lost PDCP PDUs to the transmitting side, a function of requesting retransmission of the lost PDCP PDUs, and the like.

Major functions of the NR RLCs 4-10 and 4-35 may include some of the following function. The NR RLCs may perform various functions without being limited to the following example:
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The in-sequence delivery function of an NR RLC device may refer to a function of delivering RLC SUDs received from the lower layer to the upper layer in order. If a single RLC SDU has been segmented into multiple RLC SDUs, which are then received, the in-sequence delivery of an NR RLC device may include a function of reassembling and delivering the same.

The in-sequence delivery function of an NR RLC device may include a function of reordering received RLC PDUs with reference to the RLC sequence number (SN) or PDCP sequence number (SN), a function of recording RLC PDUs lost as a result of reordering, a function of reporting the state of the lost RLC PDUs to the transmitting side, a function of requesting retransmission of the lost RLC PDUs, and the like.

The in-sequence delivery function of an NR RLC device may include a function of delivering, if there is a lost RLC SDU, only RLC SDUs preceding the lost RLC SDU to the upper layer in order.

The in-sequence delivery function of an NR RLC device may include a function of delivering, if a predetermined timer has expired even though there is a lost RLC SDU, all RLC SDUs received prior to starting of the timer to the upper layer in order.

The in-sequence delivery function of an NR RLC device may include a function of delivering, if a predetermined timer has expired even though there is a lost RLC SDU, all currently received RLC SDUs to the upper layer in order.

An NR RLC device may process RLC PDUs in the received order, regardless of the sequence number order (out-of-sequence delivery) and deliver the same to an NR PDCP device.

When receiving a segment, the NR RLC device may receive segments which are stored in a buffer, or which are to be received later, may reconfigure the same into a single complete RLC PDU, and may deliver the same to an NR PDCP device.

The NR RLC layer may include no concatenation function, and the NR MAC layer may perform a concatenation function, or the same may be replaced with a multiplexing function by the NR MAC layer.

The out-of-sequence delivery function of an NR RLC device may refer to a function of instantly delivering RLC SDUs received from the lower layer to the upper layer regardless of the order. The out-of-sequence delivery function of an NR RLC device may include a function of reassembling and delivering multiple received RLC SDUs, into which a single RLC SDU has been segmented. The out-of-sequence delivery function of an NR RLC device may include a function of storing the RLC sequence number (SN) or PDCP SN of received RLC PDUs, reordering the same, and recording lost RLC PDUs.

The NR MACs 4-15 and 4-30 may be connected to multiple NR RLC laser devices configured in a single UE, and major functions of the NR MACs may include some of the following function. The NR MACs may perform various functions without being limited to the following example:
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

NR physical (PHY) layers 4-20 and 4-25 may perform operations of channel-coding and modulating upper-layer data, making an OFDM symbol, and transmitting the same to a radio channel, or demodulating an OFDM symbol received through the radio channel, channel-decoding the same, and delivering the same to the upper layer. The NR physical layers may perform various functions without being limited to such examples.

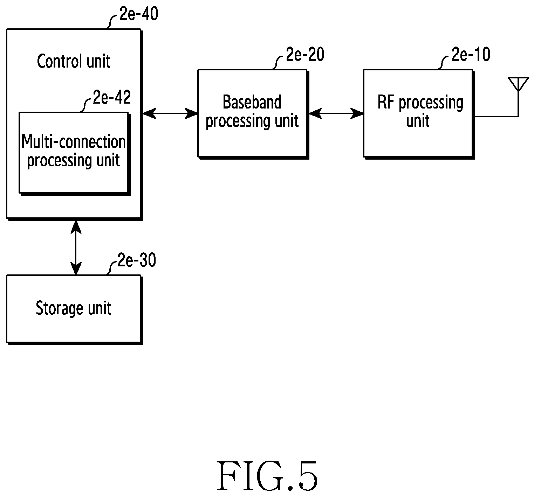

FIG. 5 is a block diagram illustrating the internal structure of a UE according to an embodiment of the disclosure.

Referring to FIG. 5, the UE may include a radio frequency (RF) processing unit 5-10, a baseband processing unit 5-20, a storage unit 5-30, and a control unit 5-40.

The RF processing unit 5-10 perform functions for transmitting/receiving signals through a radio channel, such as signal band conversion and amplification. That is, the RF processing unit 5-10 may up-convert a baseband signal provided from the baseband processing unit 5-20 into an RF band signal and then transmit the same through an antenna, and may down-convert an RF band signal received through the antenna into a baseband signal. For example, the RF processing unit 5-10 may include a transmitting filter, a receiving filter, an amplifier, a mixer, an oscillator, a digital-to-analog convertor, an analog-to-digital convertor, and the like. Although only one antenna is illustrated in FIG. 5, the UE may include multiple antennas. In addition, the RF processing unit 5-10 may include RF chains. Moreover, the RF processing unit 5-10 may perform beamforming. For the sake of beamforming, the RF processing unit 5-10 may adjust the phase and magnitude of signals transmitted/received through multiple antennas or antenna elements, respectively. In addition, the RF processing unit 5-10 may perform multi-input multi-output (MIMO), and may receive multiple layers when performing a MIMO operation.

The baseband processing unit 5-20 may perform a function of conversion between a baseband signal and a bit string according to the system's physical layer specification. For example, during data transmission, the baseband processing unit 5-20 may encode and modulate a transmitted bit string so as to generate complex symbols. In addition, during data reception, the baseband processing unit 5-20 may decode and demodulate a baseband signal provided from the RF processing unit 5-10 so as to restore the received bit string. For example, when the orthogonal frequency division multiplexing (OFDM) scheme is followed, during data transmission, the baseband processing unit 5-20 may encode and modulate a transmitted bit string so as to generate complex symbols, may map the complex symbols to subcarriers, and may then configure OFDM symbols through an inverse fast Fourier transform (IFFT) operation and cyclic prefix (CP) insertion. In addition, during data reception, the baseband processing unit 5-20 may segment a baseband signal provided from the RF processing unit 5-10 into OFDM symbols, may restore signals mapped to subcarriers through fast Fourier transform (FFT), and may then restore the received bit string through demodulation and decoding.

The baseband processing unit 5-20 and the RF processing unit 5-10 transmit and receive signals as described above. Therefore, the baseband processing unit 5-20 and the RF processing unit 5-10 may be referred to as a transmitting unit, a receiving unit, a transmitting/receiving unit, or a communication unit. Furthermore, at least one of the baseband processing unit 5-20 and the RF processing unit 5-10 may include multiple communication modules in order to support multiple different radio access technologies. In addition, at least one of the baseband processing unit 5-20 and the RF processing unit 5-10 may include different communication modules in order to process signals in different frequency bands. For example, the different radio access technologies may include a wireless LAN (for example, IEEE 802.11), a cellular network (for example, LTE), and the like. In addition, the different frequency bands may include a super-high frequency (SHF) (for example, 2.NRHz, NRhz) band and a millimeter wave (for example, 60GHz) band. The UE may transmit/receive signals with the base station by using the baseband processing unit 5-20 and the RF processing unit 5-10. The signals, in this regard, may include control information and data.

The storage unit 5-30 stores data for operations of the UE, such as default programs, application programs, and configuration information. Particularly, the storage unit 5-30 may store information related to a second access node which perform radio communication by using a second radio access technology. In addition, the storage unit 5-30 provides stores data at the request of the control unit 5-40.

The control unit 5-40 controls overall operations of the UE. For example, the control unit 5-40 transmits/receives signals through the baseband processing unit 5-20 and the RF processing unit 5-10. In addition, the control unit 5-40 records and reads data in the storge unit 5-40. To this end, the control unit 5-40 may include at least one processor. For example, the control unit 5-40 may include a communication processor (CP) which performs control for communication, and an application processor (AP) which controls upper layers such as application programs.

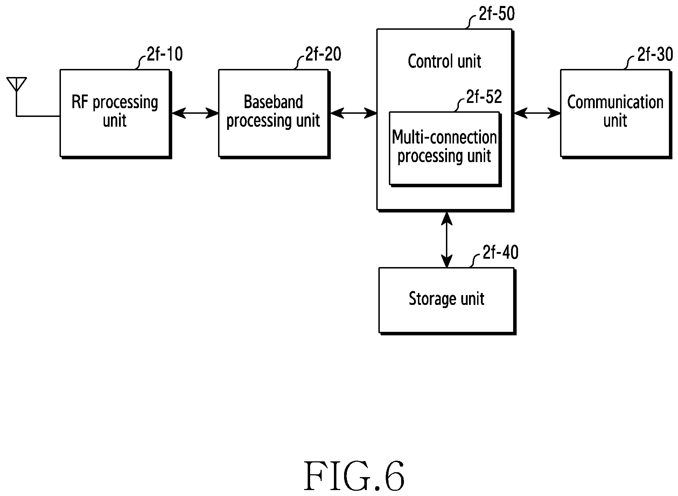

FIG. 6 is a block diagram illustrating the configuration of a base station according to an embodiment of the disclosure.

Referring to FIG. 6, the base station may include an RF processing unit 6-10, a baseband processing unit 6-20, a communication unit 6-30, a storage unit 6-40, and a control unit 6-50.

The RF processing unit 6-10 performs functions for transmitting/receiving signals through a radio channel, such as signal band conversion and amplification. That is, the RF processing unit 6-10 may up-convert a baseband signal provided from the baseband processing unit 6-20 into an RF band signal and then transmit the same through an antenna, and may down-convert an RF band signal received through the antenna into a baseband signal. For example, the RF processing unit 6-10 may include a transmitting filter, a receiving filter, an amplifier, a mixer, an oscillator, a DAC, an ADC, and the like. Although only one antenna is illustrated in FIG. 6, the base station may include multiple antennas. In addition, the RF processing unit 6-10 may include RF chains. Moreover, the RF processing unit 6-10 may perform beamforming. For the sake of beamforming, the RF processing unit 6-10 may adjust the phase and magnitude of signals transmitted/received through multiple antennas or antenna elements, respectively. The RF processing unit may perform a downward MIMO operation by transmitting one or more layers.

The baseband processing unit 6-20 may perform a function of conversion between a baseband signal and a bit string according to the physical layer specification of a radio access technology. For example, during data transmission, the baseband processing unit 6-20 may encode and modulate a transmitted bit string so as to generate complex symbols. In addition, during data reception, the baseband processing unit 6-20 may decode and demodulate a baseband signal provided from the RF processing unit 6-10 so as to restore the received bit string. For example, when the OFDM scheme is followed, during data transmission, the baseband processing unit 6-20 may encode and modulate a transmitted bit string so as to generate complex symbols, may map the complex symbols to subcarriers, and may then configure OFDM symbols through an IFFT operation and CP insertion. In addition, during data reception, the baseband processing unit 6-20 may segment a baseband signal provided from the RF processing unit 6-10 into OFDM symbols, may restore signals mapped to subcarriers through an FFT operation, and may then restore the received bit string through demodulation and decoding. The baseband processing unit 6-20 and the RF processing unit 6-10 transmit and receive signals as described above. Therefore, the baseband processing unit 6-20 and the RF processing unit 6-10 may be referred to as a transmitting unit, a receiving unit, a transmitting/receiving unit, a communication unit, or a radio communication unit. The base station may transmit/receive signals with the UE by using the baseband processing unit 6-20 and the RF processing unit 6-10. The signals, in this regard, may include control information and data.

The backhaul communication unit 6-30 provides an interface for communicating with other nodes inside the network. That is, the backhaul communication unit 6-30 converts a bit string transmitted from the main base station to another node (for example, an auxiliary base station or a core network) into a physical signal, and converts a physical signal received from another node into a bit string.

The storage unit 6-40 stores data for operations of the UE, such as default programs, application programs, and configuration information. Particularly, the storage unit 6-40 may store information regarding a bearer allocated to a connected UE, a measurement result report from the connected UE, and the like. In addition, the storage unit 6-40 may store information which serves as a criterion to determine whether to provide multi-connection to a UE or to abort the same. In addition, the storage unit 6-40 provides stores data at the request of the control unit 6-50.

The control unit 6-50 controls overall operations of the main base station. For example, the control unit 6-50 transmits/receives signals through the baseband processing unit 6-20 and the RF processing unit 6-10 or through the backhaul communication unit 6-30. In addition, the control unit 6-50 records and reads data in the storge unit 6-40. To this end, the control unit 6-50 may include at least one processor.

In an attempt to reduce network energy consumption, an operation of turning a specific cell on and off as needed may be considered. If a service is provided to UEs while a cell is turned on, and if the network demands that the cell be turned off, the network needs to process the UEs which currently receive the service in any manner. A handover to another cell may be an option, and conventional schemes require that all UEs be instructed to hand over. All UEs that received the handover command perform a handover. In this case, congestion may occur in network radio resources because the network instructs all UEs to hand over simultaneously. If successive handover commands are issued to avoid such congestion, it may be difficult to turn off the cell at the time desired by the network.

In addition, in the case of a conditional handover, the condition to perform the same includes an operation of assessing the radio strength of a serving cell and a target cell. If a cell is to be tuned off, an L3 filter is used to assess the strength of the actual serving cell, and the time to trigger needs to be considered. Therefore, a situation in which actual communication is impossible may continue for a specific period of time, and no conditional handover may be triggered during the period of time.

In order to solve such a problem, a scheme for transmitting an explicit signal indicating that the network will turn off a cell will be described.

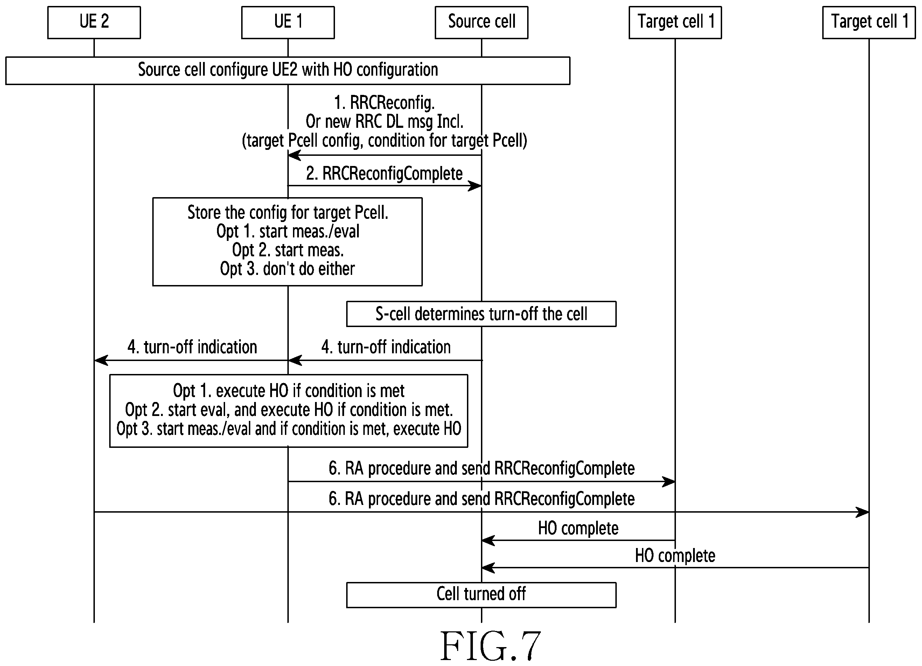

FIG. 7 is a flowchart illustrating a case in which a network according to an embodiment of the disclosure transmits an explicit signal so as to instruct a handover of UEs.

Referring to FIG. 7, a cell may transmit an indicator indicating that the cell performs an operation for network energy saving, by using a system information block (SIB) or a master information block (MIB). A UE may refer to such an indicator when initially accessing the cell in order to be served by the cell.

After the UE accesses the cell, the network may provide all UEs or a specific group of UEs, which are connected through a serving cell, with information of a specific candidate target cell regarding each UE, configuration information to be used in a target cell, and condition information for authenticating validity of the target cell. The information of the target cell, the configuration information to be used in the target cell, and the condition information for authenticating validity may be related to an indicator intended for a new type of handover, or the corresponding field. Message for delivering the same may be an RRCReconfiguration message or a specific DL RRC message.

The configuration information to be used in the target cell may be an RRCReconfiguration message, that is, a handover command. This information may be delivered to a UE while being associated with an indicator indicating a handover to be performed if a condition is satisfied after a turnoff indication is received, or while being included in the corresponding field.

In addition, the information of a target cell may include a frequency in which the target cell is positioned, or an absolute radio frequency channel number (ARFCN), or a measurement object Id (MO Id) value indicating the frequency, and may further include the target cell's physical cell Id and/or NR cell global identifier (NGCI). If the information of the target cell includes the MO Id, the MO needs to be separately configured for the UE through a measurement configuration. The above-described pieces of information may be delivered to a UE while being associated with an indicator indicating a handover to be performed if a condition is satisfied after a turnoff indication is received, or while being included in the corresponding field, similarly to the configuration information to be used in the target cell.

The information for authenticating validity of a target cell may include a condition to authenticate that the radio signal strength of the target cell is equal to/higher than a specific value, such as event A4. Therefore, it may be considered that the condition is satisfied if a specific threshold is given, such as event A4, and if the target cell is equal to/higher than the threshold. In addition, a measurement quantity such as reference signals received power (RSRP)/reference signal received quality (RSRQ)/received signal strength indicator (RSSI) may be given, and the quantity of each indicated method may be considered as the radio signal strength. According to another method, the above-mentioned pieces of information are not separately indicated, a specific reportConfig is configured in a measurement configuration, and the corresponding reportConfig Id is indicated. In this case, the reportconfig may associate the above-mentioned pieces of information with an indicator intended for a new type of handover. According to another method, a specific MO mentioned as target cell information and a specific reportconfig indicating an event may be configured for a UE through the UE's current measurement configuration, respectively, and a measurement ID configured by the MO and reportconfig may be used as a condition. Pieces of information indicating such a condition may be associated with an indicator intended for a new type of handover, or included in the corresponding field.

Such information may include an RRCReconfiguration message to be used in the target cell, that is, a handover (HO) command (CMD) and/or a MeasObject regarding the frequency of a target Pcell (or ARFCN of a target Pcell) inside the RRCReconfiguration or in a separate field and/or an explicit PCI regarding the target Pcell.

This measurement object (MO) needs to be configured in a MeasConfig included in the measurement configuration of the Pcell.

The MO may indicate with a group HO purpose field or indication.

The radio state regarding the quality of the target Pcell needs to be identified.

A specific event such as A4 may be indicated in the reportConfig, and measId which maps such reportConfig and the above MO may be designated as a condition, or the reportConfig and this specific event may be designated as a condition.

If MeasID is configured, this MeasID needs to be indicated in the group HO purpose field or indicated together with an indication.

(This information can include RRCReconfiguration msg to be used at the target cell, i.e., HO CMD. ; and / or

Inside RRCReconfiguration or in the separate field, MeasObject for the target Pcell's frequency (or ARFCN of the target Pcell frequency), and/or explicit PCI for the target Pcell

This MO should be configured in MeasConfig in Pcell's meas configuration.

MO can be indicated with groupHO purpose field or indication

Radio condition for the target Pcell's quality to be checked

Specific event like A4 can be indicated in reportConfig, and the measId of the mapping this reportConfig and MO above can be given as a condition, Or the reportConfig or this specific event can be given as a condition.

For the case measId is configured, then this measId need to be indicated in the group HO purpose field or with indication.)

In addition, upon receiving the above-described configuration, the UE may store the configuration information and may perform condition assessment and measurement operations. The condition assessment and measurement operations may vary depending on the type of information configuration.

Opt 1. Upon receiving condition-related measurement and condition assessment information (that is, the above-mentioned configuration information), measurement and assessment may be performed instantly. In this case, if the existing measurement configuration field has an MO indicated as a condition for this type of HO and a reportConfig configured therein, assessment may be performed instantly.

Measurement is started if MeasId or MO is indicated, an evaluation of the target Pcell radio condition or indicated reportConfig is started (start measurement on measId or MO indicated, and start evaluation of target Pcell radio condition or reportConfig indicated). In this case, each MO/reportConfig also needs to be configured in the legacy meas.Config field.

Opt 2. Measurement is instantly performed upon reception, but condition assessment may be performed after receiving a turnoff signal or indication from the serving cell.

Measurement is started if MeasId or MO is indicated, and evaluation of the target Pcell radio state is started only if a turnoff indication is received, or the timer expires (start measurement on measId or MO indicated but only start the evaluation of target Pcell radio condition when turnoff indication received or timer expiry)

Opt 3. Condition-related measurement and condition assessment may be performed after a turnoff signal or indication is received. In this case, MO, reportConfig, or related physical cell identify (PCI)/freq/event info and the like may be included in this HO type field unrelated to the meas.Config field. Alternatively, if included in the existing meas.Config field, this MO/reportConfig may be associated with an separate indication and performed only if a turnoff signal is received.

If a turnoff indication is received, or if the timer expires, measurement regarding the MeasId or MO is started, and evaluation of the target Pcell radio state is started (start measurement on measId or MO and evaluation of target Pcell radio condition when turnoff indication received or timer expiry). In this case, MO, reportConfig or related PCI/freq/event info and the like may be included in this HO type field unrelated to the meas.Config field. Alternatively, if included in the existing meas.Config field, this MO/reportConfig needs an indication that the same is associated with an separate indication and triggered only if a corresponding condition is satisfied.

Upon determining to turn off a serving cell, a base station may transmit a turnoff signal or indication. The turnoff signal or indication may be transmitted through a SIB or MIB. That is, the turnoff signal or indication may be included in the SIB or MIB (Turn off indication could be in SIB or MIB). In order for a UE to recognize such an indication, there may be SIB modification period delay (There could be SIB modification period latency for the UE to recognize the indication). Alternatively, the turnoff signal or indication may be transmitted through an L1 signal. That is, the turnoff signal or indication may be included in an L1 signal, that is, a PDCCH having a specific RNTI (Turn off indication could be in L1 signal, e.g., in PDCCH with specific RNTI). UEs may have a specific radio network temporary identifier (RNTI) configured therefor, and this RNTI information may be used to detect a turnoff signal or indication through downlink control information (DCI) on a scrambled physical downlink control channel (PDCCH). Alternatively, a turnoff signal or indication may be detected through data of a physical downlink shared channel (PDSCH) indicated on such restored DCI. The RNTI information may be transmitted to a UE together with pre-transmitted target cell information. The UE monitors all PDCCHs and identifies whether there is a PDCCH or DCI scrambled with this RNTI. If there is, this may be considered as a turnoff signal from the serving cell or, furthermore, the indicated PDSCH may be received to obtain turnoff-related data (UE monitor the every PDCCH and check if there is any PDCCH or DCI scrambled with this RNTI. If there is, that can be regarded of turn-off signal from the serving cell, or further it can listen the pointed PDSCH to get the data regarding turn-off). The RNTI information, timer value, and the like may be included in configuration information and transmitted.

According to another method, the turnoff signal or indication may be a downlink MAC CE. In this case, the MAC CE may indicate a specific target candidate cell to be triggered. The indication information may be a physical cell identity (PCI) and/or absolute radio frequency channel number (AFRCN) value or the ID of configuration information indicating a target cell currently configured for the UE, that is, condReconfig ID value.

Thereafter, upon receiving a turnoff signal or indication from the serving cell, a UE which has been performing measurement and condition assessment according to options at the time when target cell information was configured may hand over to the corresponding target cell if the condition of given candidate target cell(s) is satisfied.

More specifically, in the case of opt 1, the UE may receive CHO configuration information and condition information, may perform measurement for condition assessment, and may perform a condition assessment operation, based on the measurement result. When the UE has received a turnoff signal or indication from the serving cell, the condition may or may not have been satisfied. If the condition is satisfied, the UE may hand over to the target cell. If the condition is not satisfied, the UE may perform measurement and condition assessment operations while being still connected to the current source cell. In addition, the UE may perform a handover at any later time at which the condition is satisfied.

In the case of Opt 2, the UE may receive CHO configuration information and condition information and may solely perform measurement for condition assessment. When the UE has received a turnoff signal or indication from the serving cell, the condition may perform an evaluation operation regarding whether the measurement result satisfies the condition. If the condition is satisfied, the UE may hand over to the target cell. Alternatively, if the condition is not satisfied, the UE may perform a condition satisfaction assessment operation based on the measurement and measurement result while being connected to the current source cell. The UE may perform a handover if the condition is satisfied later.

In the case of Opt 3, the UE may receive CHO configuration information and condition information and may not perform any separate measurement operation and condition assessment operation. When the UE has received a turnoff signal or indication from the serving cell, the UE may perform a measurement operation based on the condition information and/or a condition assessment operation based on the measurement operation. If a condition according to execution of the condition assessment operation is satisfied, the UE may hand over to the target cell. Alternatively, if the condition is not satisfied, the UE may perform measurement and a condition assessment operation of the measurement result while being connected to the current source cell. The UE may perform a handover if the condition is satisfied later.

In another embodiment, if a turnoff signal or indication is received, a handover to a given target cell may be performed without condition assessment. In this case, the base station may not include target cell condition information in configuration information, and may not perform measurement for determining whether a condition is satisfied. In another embodiment, if a single UE is given multi-candidate target cell information, and if a turnoff signal or indication is received, a condition may be evaluated with regard to multiple candidates. If multiple candidates satisfy the condition, the UE may select a specific cell and hand over to the cell as a target. If multiple candidates are given, if no condition information is received, and if a turnoff signal or indication is received, the UE may select one from the multiple candidate cells and hand over to the selected cell.

If each UE successfully hands over to the target cell, the target cell may deliver a handover completion message to the source cell. If the source cell receives a message indicating that all UEs have completed handover, the network may turn off the source cell.

In the case of an embodiment in which a turnoff signal or indication is given, and a candidate cell condition is then evaluated, if there is no candidate cell satisfying the valuation result, a UE may perform one of the following operations. That is, the UE receives a turnoff signal, and if the target Pcell does not satisfy the condition (Upon receiving the turn off indication, if the target Pcell is not fulfilling the condition,)

Opt 1. RRCReestablishment operation may be performed. That is, the UE may perform RRCReestablishment (UE does RRCReestablishment).

If there is a configured HO or CHO recovery, a CHO recovery is performed by identifying a stored candidate cell (If CHO or CHO recovery was configured, does CHO recovery by checking the stored candidate cells).

If there is no configured CHO, a legacy cell is selected (If no CHO configured, legacy cell selection).

Opt 2. The UE may indicate to the network that there is no turnoff withdrawal request or available target Pcell. This indication may be transmitted through an RRC UL message or a MAC CE or an L1 signal's UCI.

The UE may request that the cell not be turned off. The UE transmits an RRC UL message or a MAC CE or an L1 UCI in order to indicate that there is no available target Pcell, or the cell is not turned off. In this case, step 1 may include a time value and/or information regarding the time before or after an indication of when the UE has to make a request if there is no available target Pcell in connection with a turnoff indication.

For example, one second before the planned gNB's turnoff time.

For example, one second after a turnoff indication is received.

If a timer value has been indicated in step 1, and if the UE has found that this groupHO has no available target Pcell, it may be requested not to turn off the cell within one second after the indication is received.

(UE request not to turn-off cell. UE sends RRC UL msg or MAC CE or L1 UCI to indicate that there is no available target Pcell, or not turn-off the cell. In this case, step 1 also can include the timer value and/or the information 'before' or 'after' the indication reception that by when UE should request if there is no available target Pcell regarding turn-off indication

For example, 1 sec before the planned gNB's power off time

For example, 1 sec after the receiving turn-off indication

If timer value was indicated in step 1, and UE found there is no available target Pcell for this groupHO, then it can request not turnoff the cell within either 1 sec after the indication reception.)

In addition, when the network delivers target cell configuration information to a UE, the UE may be requested to send, until a specific timepoint since an indication is received, an indication indicating that there is no turnoff withdrawal request or available target cell. That is, an after-indicator and/or time information may be delivered. If the network delivers a timer value (T_to) which uses predefined turnoff time information, not an explicit turnoff indication, together with target cell configuration information, the UE may configure a timer by using a timer value received to deliver an indication that there is no turnoff withdrawal request or available target cell. That is, before the timer expires, the UE may deliver an indication that there is no turnoff withdrawal request or available target cell.

In an embodiment, the network may request a report before a specific cell turnoff time, in order to perform a following procedure after collecting results from multiple UEs. That is, the timer value (T_to) may refer to the cell turnoff time, and the network may configure delivery of an indication that there is no turnoff withdrawal or available target cell until a specific time (T_report) before the cell is turned off. The network may deliver two time values (T_to and T_report) to a UE. Upon receiving the two values, the UE may configure a timer having a T_to-T_report value and may send an indication that there is no turnoff withdrawal or available target cell until the timer expires.

Opt 3. The UE reports that target Pcell quality is available (not possible).

After or before receiving an indication, the UE may report availability of the target Pcell according to measurement and evaluation.

### (UE report (not)available of target Pcell quality

Either after receiving the indication or before the indication, UE can report availability of target Pcell based on meas and eval)

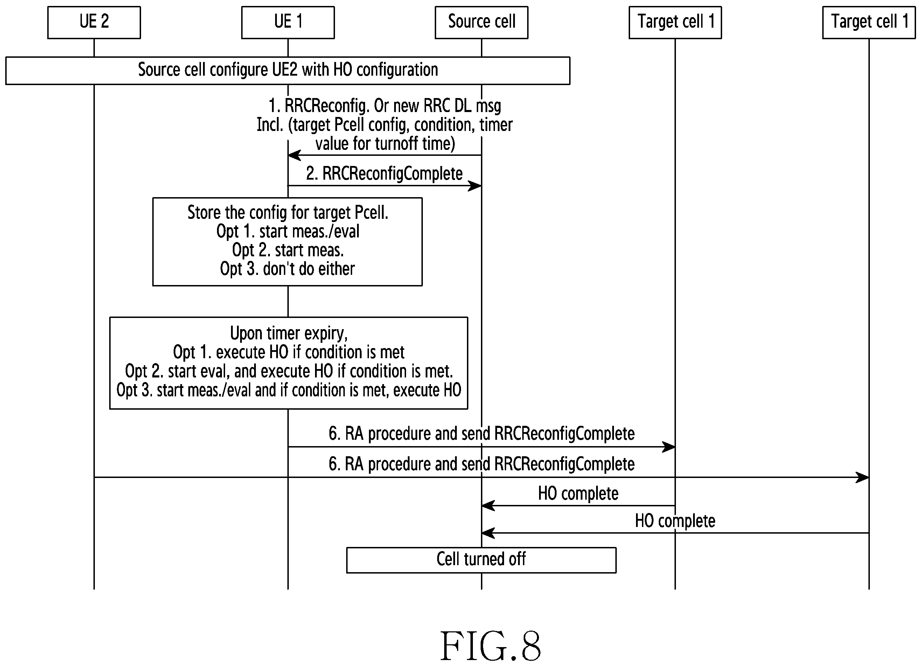

FIG. 8 is a flowchart illustrating a case in which a serving cell according to an embodiment of the disclosure transmits no explicit turnoff signal or indication, and delivers a timer value to a UE, based on predefined turnoff time information.

Referring to FIG. 8, a cell may transmit an indicator indicating that the cell performs a network energy saving operation as an SIB or MIB. A UE may refer to such an indicator when initially accessing the cell to be served by the cell.

After the UE has accessed the cell, the network may configure, for all UEs connected through a serving cell or a specific group of UEs, information of a specific candidate target cell regarding each UE, configuration information to be used in the target cell, and condition information for authenticating validity of the target cell. Additionally, the UE may receive a configuration of the value of remaining time until the cell will be turned off. The information of a target cell, the configuration information to be used in the target cell, the condition information for authenticating validity, and timer values may be related to an indicator intended for a new type of handover, or the corresponding field. A message for delivering this may be an RRCReconfiguration message or a specific DL RRC message.

The configuration information to be used in the target cell may be an RRCReconfiguration message, that is, a handover command. This information may be delivered to a UE while being associated with an indicator indicating a handover to be performed if a condition is satisfied after a turnoff indication is received, or while being included in the corresponding field.

In addition, the information of a target cell may include a frequency in which the target cell is positioned, or an absolute radio frequency channel number (ARFCN), or a measurement object Id (MO Id) value indicating the frequency, and may further include the target cell's physical cell Id. If the information of the target cell includes the MO Id, the MO needs to be separately configured for the UE through a measurement configuration. The above-described pieces of information may be delivered to a UE while being associated with an indicator indicating a handover to be performed if a condition is satisfied after a turnoff indication is received, or while being included in the corresponding field, similarly to the configuration information to be used in the target cell.

The information for authenticating validity of a target cell may include a condition to authenticate that the radio signal strength of the target cell is equal to/higher than a specific value, such as event A4. Therefore, it may be considered that the condition is satisfied if a specific threshold is given, such as event A4, and if the target cell is equal to/higher than the threshold. In addition, a measurement quantity such as reference signals received power (RSRP)/reference signal received quality (RSRQ)/received signal strength indicator (RSSI) may be given, and the quantity of each indicated method may be considered as the radio signal strength. According to another method, the above-mentioned pieces of information are not separately indicated, a specific reportConfig is configured in a measurement configuration, and the corresponding reportConfig Id is indicated. In this case, the reportconfig may associate the above-mentioned pieces of information with an indicator intended for a new type of handover. According to another method, a specific MO mentioned as target cell information and a specific reportconfig indicating an event may be configured for a UE through the UE's current measurement configuration, respectively, and a measurement ID configured by the MO and reportconfig may be used as a condition. Pieces of information indicating such a condition may be associated with an indicator intended for a new type of handover, or included in the corresponding field.

In addition, upon receiving the above-described configuration, the UE may store the configuration information and may perform condition assessment and measurement operations. The condition assessment and measurement operations may vary depending on the type of information configuration.

Opt 1. Upon receiving condition-related measurement and condition assessment information (that is, the above-mentioned configuration information), measurement and assessment may be performed instantly. In this case, if the existing measurement configuration field has an MO indicated as a condition for this type of HO and a reportConfig configured therein, assessment may be performed instantly.

Opt 2. Measurement is instantly performed upon reception, but condition assessment may be performed after the timer expires in the serving cell.

Opt 3. Condition-related measurement and condition assessment may be performed after the timer expires. In this case, MO, reportConfig, or related PCI/freq/event info and the like may be included in this HO type field unrelated to the meas.Config field. Alternatively, if included in the existing meas.Config field, this MO/reportConfig may be associated with an separate indication and performed only if the timer expires.

In addition, upon receiving a timer value delivered together with configuration information, the UE may start a timer. This timer may be restarted if a new timer value is configured, or if configuration information regarding candidate target cells or information of a target cell or condition information of the target cell is updated.

Thereafter, if the timer expires, a UE which has been performing measurement and condition assessment according to options at the time when target cell information was configured may hand over to the corresponding target cell if the condition of given candidate target cell(s) is satisfied. In another embodiment, if the timer expires, a handover to the given target cell may be performed without condition assessment. In this case, the base station may not include target cell condition information in configuration information, and may not perform measurement for determining whether a condition is satisfied. In another embodiment, if a single UE is given multi-candidate target cell information, and if the timer expires, a condition may be evaluated with regard to multiple candidates. If multiple candidates satisfy the condition, the UE may select a specific cell and hand over to the cell as a target. If multiple candidates are given, if no condition information is received, and if the timer expires, the UE may select one from the multiple candidate cells and hand over to the selected cell.

If each UE successfully hands over to the target cell, the target cell may deliver a handover completion message to the source cell. If the source cell receives a message indicating that all UEs have completed handover, the network may turn off the source cell.

In the case of an embodiment in which a turnoff signal or indication is given, and a candidate cell condition is then evaluated, if there is no candidate cell satisfying the valuation result, a UE may perform one of the following operations.

Opt 1. RRCReestablishment operation may be performed.

Opt 2. The UE may indicate to the network that there is no turnoff withdrawal request or available target Pcell. This indication may be transmitted through an RRC UL message or a MAC CE or an L1 signal's UCI. In addition, when the network delivers target cell configuration information to a UE, the UE may be requested to send, until a specific timepoint since an indication is received, an indication indicating that there is no turnoff withdrawal request or available target cell. That is, an after-indicator and/or time information may be delivered. If the network delivers a timer value which uses predefined turnoff time information, not an explicit turnoff indication, together with target cell configuration information, the UE may configure a timer by using a timer value received to deliver an indication that there is no turnoff withdrawal request or available target cell.

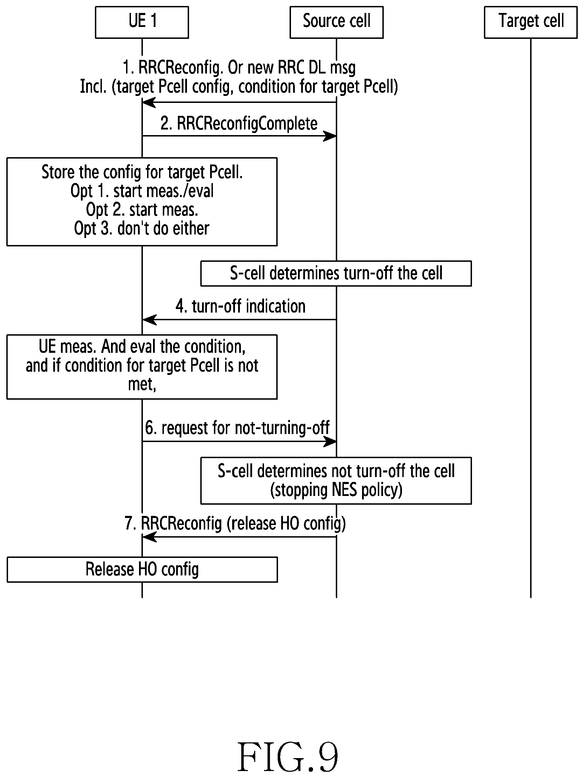

FIG. 9 is a flowchart illustrating a case in which a turnoff withdrawal request message is delivered after an indication according to an embodiment of the disclosure.

Upon receiving such a request message, a cell may determine whether or not to withdraw the turnoff and may withdraw the turnoff. When the turnoff is withdrawn, a release request message regarding a new type of HO configuration may be delivered to a UE. Upon receiving the release request message, the UE may release the corresponding configuration.

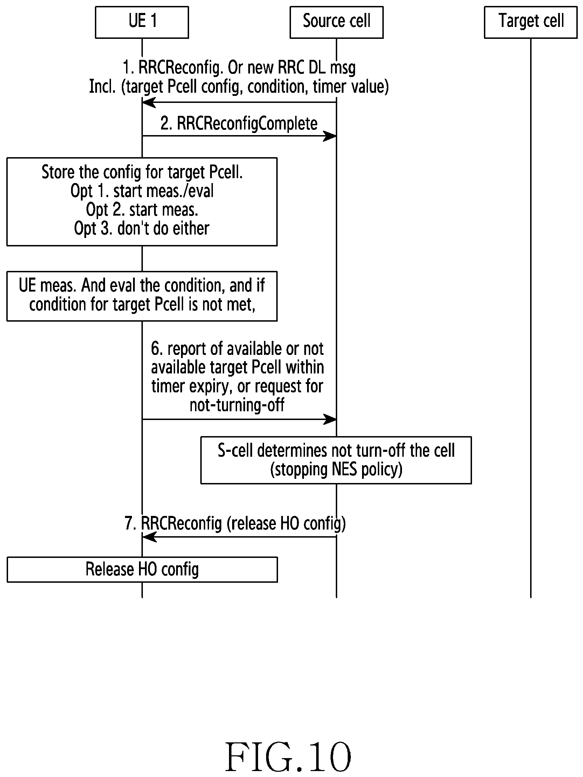

FIG. 10 is a flowchart illustrating a case in which a message indicating absence of an available target cell or requesting turnoff withdrawal is delivered if a predefined timer according to an embodiment of the disclosure is given and then expires.

Referring to FIG. 10, a cell may transmit an indicator indicating that the cell performs a network energy saving operation as an SIB or MIB. A UE may refer to such an indicator when initially accessing the cell to be served by the cell.

After the UE has accessed the cell, the network may configure, for all UEs connected through a serving cell or a specific group of UEs, information of a specific candidate target cell regarding each UE, configuration information to be used in the target cell, and condition information for authenticating validity of the target cell. Additionally, the UE may receive a configuration of the value of remaining time until the cell will be turned off. In this regard, an indicator indicating whether before or after timer expiration, and an actual application time value may be given. The information of a target cell, the configuration information to be used in the target cell, the condition information for authenticating validity, and timer values may be related to an indicator intended for a new type of handover, or the corresponding field. A message for delivering this may be an RRCReconfiguration message or a specific DL RRC message.

The configuration information to be used in the target cell may be an RRCReconfiguration message, that is, a handover command. This information may be delivered to a UE while being associated with an indicator indicating a handover to be performed if a condition is satisfied after a turnoff indication is received, or while being included in the corresponding field.

In addition, the information of a target cell may include a frequency in which the target cell is positioned, or an absolute radio frequency channel number (ARFCN), or a measurement object Id (MO Id) value indicating the frequency, and may further include the target cell's physical cell Id. If the information of the target cell includes the MO Id, the MO needs to be separately configured for the UE through a measurement configuration. The above-described pieces of information may be delivered to a UE while being associated with an indicator indicating a handover to be performed if a condition is satisfied after a turnoff indication is received, or while being included in the corresponding field, similarly to the configuration information to be used in the target cell.

The information for authenticating validity of a target cell may include a condition to authenticate that the radio signal strength of the target cell is equal to/higher than a specific value, such as event A4. Therefore, it may be considered that the condition is satisfied if a specific threshold is given, such as event A4, and if the target cell is equal to/higher than the threshold. In addition, a measurement quantity such as reference signals received power (RSRP)/reference signal received quality (RSRQ)/received signal strength indicator (RSSI) may be given, and the quantity of each indicated method may be considered as the radio signal strength. According to another method, the above-mentioned pieces of information are not separately indicated, a specific reportConfig is configured in a measurement configuration, and the corresponding reportConfig Id is indicated. In this case, the reportconfig may associate the above-mentioned pieces of information with an indicator intended for a new type of handover. According to another method, a specific MO mentioned as target cell information and a specific reportconfig indicating an event may be configured for a UE through the UE's current measurement configuration, respectively, and a measurement ID configured by the MO and reportconfig may be used as a condition. Pieces of information indicating such a condition may be associated with an indicator intended for a new type of handover, or included in the corresponding field.

In addition, upon receiving the above-described configuration, the UE may store the configuration information and may perform condition assessment and measurement operations. The condition assessment and measurement operations may vary depending on the type of information configuration.

Opt 1. Upon receiving condition-related measurement and condition assessment information (that is, the above-mentioned configuration information), measurement and assessment may be performed instantly. In this case, if the existing measurement configuration field has an MO indicated as a condition for this type of HO and a reportConfig configured therein, measurement and assessment may be performed instantly.

Opt 2. Measurement is instantly performed upon reception, but condition assessment may be performed after the timer expires in the serving cell.

Opt 3. Condition-related measurement and condition assessment may be performed after the timer expires. In this case, MO, reportConfig, or related PCI/freq/event info and the like may be included in this HO type field unrelated to the meas.Config field. Alternatively, if included in the existing meas.Config field, this MO/reportConfig may be associated with an separate indication and performed only if the timer expires.

In addition, upon receiving a timer value delivered together with configuration information, the UE may start a timer. This timer may be restarted if a new timer value is configured, or if configuration information regarding candidate target cells or information of a target cell or condition information of the target cell is updated.

After the UE received the configuration and started the timer, at a predetermined timepoint before or after designated timer expiration, it may be determined whether a determined candidate target cell exists. Therefore, the cell may be reported whether a target call exists as a result of condition assessment. Alternatively, the UE may deliver a turnoff withdrawal request message.

Upon receiving such a report or request message, a cell may determine whether or not to withdraw the turnoff and may withdraw the turnoff. When the turnoff is withdrawn, a release request message regarding a new type of HO configuration may be delivered to a UE. Upon receiving the release request message, the UE may release the corresponding configuration.

The methods according to various embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

Furthermore, in methods of the disclosure, some or all of the contents of each embodiment may be implemented in combination without departing from the essential spirit and scope of the disclosure.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Furthermore, the above respective embodiments may be employed in combination, as necessary.

## Claims

1. A method of a UE in a wireless communication system, the method comprising:
receiving an RRC message including information related to a target cell for a handover, valid condition information of the target cell, and information indicating a handover type from a base station;
receiving information related to turnoff of a serving cell from the base station; and
performing the handover, based on configuration information regarding the target cell and the valid condition information of the target cell.

2. The method of claim 1, further comprising:
performing measurement regarding the target cell, based on the information related to the target cell; and
determining whether the target cell is valid, based on the valid condition information of the target cell.

3. The method of claim 1, further comprising, in case that there is no valid target cell, transmitting a turnoff withdrawal request or an indication that there is no valid target cell to the base station, or performing an RRC reestablishment operation.

4. The method of claim 1, wherein the information related to turnoff comprises at least one of a turnoff indication regarding the serving cell and turnoff time information.

5. The method of claim 1, wherein the valid condition information of the target cell includes a condition regarding a strength of a signal received from the target cell.

6. A method of a base station in a wireless communication system, the method comprising:
transmitting an RRC message including information related to a target cell for a handover, valid condition information of the target cell, and information indicating a handover type to a UE;
transmitting information related to turnoff of a serving cell to the UE; and
turning off the serving cell.

7. The method of claim 6, further comprising:
receiving a turnoff withdrawal request or an indication that there is no valid target cell from the UE, or performing an RRC reestablishment operation.

8. The method of claim 1, the information related to turnoff comprises at least one of a turnoff indication regarding the serving cell and turnoff time information, and
the valid condition information of the target cell includes a condition regarding a strength of a signal received from the target cell.

9. A UE in a wireless communication system, the UE comprising:
a communication unit; and
a control unit connected to the communication unit,
wherein the control unit is configured to:
receive an RRC message including information related to a target cell for a handover, valid condition information of the target cell, and information indicating a handover type from a base station;
receive information related to turnoff of a serving cell from the base station; and
perform the handover, based on configuration information regarding the target cell and the valid condition information of the target cell.

10. The UE of claim 9, wherein the control unit is configured to:
perform measurement regarding the target cell, based on the information related to the target cell; and
determine whether the target cell is valid, based on the valid condition information of the target cell.

11. The UE of claim 9, wherein the control unit is configured to, in case that there is no valid target cell, transmit a turnoff withdrawal request or an indication that there is no valid target cell to the base station, or perform an RRC reestablishment operation.

12. The UE of claim 9, wherein the information related to turnoff includes at least one of a turnoff indication regarding the serving cell and turnoff time information.

13. A base station in a wireless communication system, the base station comprising:
a communication unit; and
a control unit connected to the communication unit,
wherein the control unit is configured to:
transmit an RRC message including information related to a target cell for a handover, valid condition information of the target cell, and information indicating a handover type to a UE;
transmit information related to turnoff of a serving cell to the UE; and
turn off the serving cell.

14. The base station of claim 13, further comprising receiving a turnoff withdrawal request or an indication that there is no valid target cell from the UE, or performing an RRC reestablishment operation.

15. The base station of claim 13, the information related to turnoff comprises at least one of a turnoff indication regarding the serving cell and turnoff time information, and
the valid condition information of the target cell includes a condition regarding a strength of a signal received from the target cell.
